(19) Europäisches Patentamt
European Patent Office
Office européen des brevets

(11) **EP 4 317 716 A1**

(12) **EUROPEAN PATENT APPLICATION**
published in accordance with Art. 153(4) EPC

(43) Date of publication:
**07.02.2024 Bulletin 2024/06**

(21) Application number: **22784396.8**

(22) Date of filing: **07.03.2022**

(51) International Patent Classification (IPC):
**F16C 13/00** (2006.01)    **C08F 220/42** (2006.01)
**C08F 236/18** (2006.01)    **C08L 11/02** (2006.01)

(52) Cooperative Patent Classification (CPC):
**C08F 220/42; C08F 236/18; C08L 11/02; F16C 13/00**

(86) International application number:
**PCT/JP2022/009790**

(87) International publication number:
**WO 2022/215411 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 JP 2021064784**

(71) Applicant: **Denka Company Limited**
**Tokyo 103-8338 (JP)**

(72) Inventors:
• **NISHINO Wataru**
  **Tokyo 103-8338 (JP)**
• **ONUKI Suguru**
  **Tokyo 103-8338 (JP)**
• **ANDO Ryotaro**
  **Tokyo 103-8338 (JP)**

(74) Representative: **Mewburn Ellis LLP**
**Aurora Building**
**Counterslip**
**Bristol BS1 6BX (GB)**

(54) **CHLOROPRENE POLYMER, CHLOROPRENE POLYMER COMPOSITION, VULCANIZATION MOLDED BODY AND ROLL**

(57)    A chloroprene polymer having a structural unit derived from chloroprene and a structural unit derived from an unsaturated nitrile, in which the chloroprene polymer has peak tops at 5.80 to 6.00 ppm and 5.10 to 5.30 ppm in a 1H-NMR spectrum as measured in a deuterochloroform solvent, in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)B ≤ 2.0/100", and a content of the structural unit derived from an unsaturated nitrile is more than 0% by mass and 23% by mass or less.

EP 4 317 716 A1

# Description

## Technical Field

The present invention relates to a chloroprene polymer, a chloroprene polymer composition, a vulcanized molded article, a roll, and the like.

## Background Art

A chloroprene polymer is widely used as a material for industrial rubber products. However, there are problems in that the oil resistance of a vulcanized molded article to be obtained using the chloroprene polymer is not sufficient and the vulcanized molded article cannot be used in oily environments such as the periphery of engines. On the other hand, as means for improving the oil resistance, a method for producing a chloroprene copolymer copolymerized with an unsaturated nitrile has been known (see, for example, Patent Literature 1 below). The chloroprene copolymer copolymerized with an unsaturated nitrile can be vulcanized and molded and can be used for products such as transmission belts, conveyor belts, hoses, and wipers (see, for example, Patent Literatures 2 and 3 below).

## Citation List

### Patent Literature

Patent Literature 1: Japanese Unexamined Patent Publication No. S55-145715
Patent Literature 2: Japanese Unexamined Patent Publication No. 2012-82289
Patent Literature 3: International Publication WO 2013/015043

## Summary of Invention

### Technical Problem

However, it is required for the chloroprene polymer to obtain excellent compression set, cold resistance, and heat resistance in a vulcanized molded article while obtaining excellent moldability, in addition to excellent oil resistance in the vulcanized molded article.

An object of an aspect of the present invention is to provide a chloroprene polymer with which a vulcanized molded article having excellent oil resistance, compression set, cold resistance, and heat resistance can be obtained, while obtaining excellent moldability. An object of another aspect of the present invention is to provide a chloroprene polymer composition containing the chloroprene polymer. An object of another aspect of the present invention is to provide a vulcanized molded article of the chloroprene polymer composition. An object of another aspect of the present invention is to provide a roll having the vulcanized molded article.

### Solution to Problem

An aspect of the present invention relates to a chloroprene polymer having a structural unit derived from chloroprene and a structural unit derived from an unsaturated nitrile, in which the chloroprene polymer has peak tops at 5.80 to 6.00 ppm and 5.10 to 5.30 ppm in a 1H-NMR spectrum as measured in a deuterochloroform solvent, in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)B ≤ 2.0/100", and a content of the structural unit derived from an unsaturated nitrile is more than 0% by mass and 23% by mass or less.

Another aspect of the present invention relates to a chloroprene polymer composition containing the aforementioned chloroprene polymer.

Another aspect of the present invention relates to a vulcanized molded article of the aforementioned chloroprene polymer composition.

Another aspect of the present invention relates to a roll having a vulcanized molded article of a chloroprene polymer composition, in which the chloroprene polymer composition contains a chloroprene polymer, the chloroprene polymer has a structural unit derived from chloroprene and a structural unit derived from an unsaturated nitrile, the chloroprene polymer has peak tops at 5.80 to 6.00 ppm and 5.10 to 5.30 ppm in a 1H-NMR spectrum as measured in a deuterochloroform solvent, in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)B ≤ 2.0/100", and a content of the structural unit derived from an unsaturated nitrile is more than 0% by mass and 23% by mass or less.

**Advantageous Effects of Invention**

According to an aspect of the present invention, it is possible to provide a chloroprene polymer with which a vulcanized molded article having excellent oil resistance, compression set, cold resistance, and heat resistance can be obtained, while obtaining excellent moldability. According to another aspect of the present invention, it is possible to provide a chloroprene polymer composition containing the chloroprene polymer. According to another aspect of the present invention, it is possible to provide a vulcanized molded article of the chloroprene polymer composition. According to another aspect of the present invention, it is possible to provide a roll having the vulcanized molded article.

**Description of Embodiments**

Hereinafter, embodiments for carrying out the present invention will be specifically described. Note that, the present invention is not limited to embodiments described below.

"A or more" of the numerical range means A and a range of more than A. "A or less" of the numerical range means A and a range of less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical value range may be replaced with the value shown in Examples. Materials listed as examples in the present specification can be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified.

The term "peak" in an NMR spectrum refers to a convex inflection point in the NMR spectrum and also encompasses a shoulder shape as well as a peak showing a clear convex shape. In a case where there are a plurality of peaks in a range of a specific chemical shift (abscissa axis) in the NMR spectrum, the term "peak area" in this range refers to the total value of peak areas of the plurality of peaks.

<Chloroprene polymer>

A chloroprene polymer of the present embodiment is a chloroprene-unsaturated nitrile copolymer having a structural unit derived from chloroprene (chloroprene unit, chloroprene bonding unit) and a structural unit derived from an unsaturated nitrile (unsaturated nitrile unit, unsaturated nitrile bonding unit). The chloroprene polymer of the present embodiment has chloroprene and an unsaturated nitrile as monomer units. The content of the structural unit derived from an unsaturated nitrile is more than 0% by mass and 23% by mass or less on the basis of the total amount of the chloroprene polymer.

The chloroprene polymer of the present embodiment has peak tops at 5.80 to 6.00 ppm and 5.10 to 5.30 ppm in a 1H-NMR spectrum as measured in a deuterochloroform solvent. In the 1H-NMR spectrum of the chloroprene polymer of the present embodiment, a peak area ratio A/B of a peak area A at 5.80 to 6.00 ppm and a peak area B at 4.05 to 6.20 ppm is 0.9/100 to 1.1/100, and the peak area A at 5.80 to 6.00 ppm, the peak area B at 4.05 to 6.20 ppm, and a peak area C at 5.10 to 5.30 ppm satisfy formula "(C - 2A)/B ≤ 2.0/100".

The chloroprene polymer of the present embodiment has excellent moldability, and for example, can obtain a scorch time of 18 minutes or longer (preferably 19 minutes or longer) as measured according to JIS K 6300-1.

According to the chloroprene polymer of the present embodiment, a vulcanized molded article having excellent oil resistance, compression set, cold resistance, and heat resistance can be obtained. According to the chloroprene polymer of the present embodiment, in evaluation methods described in Examples, a vulcanized molded article having excellent oil resistance, compression set, cold resistance, and heat resistance can be obtained, and a vulcanized molded article having excellent oil resistance, compression set, cold resistance, and heat resistance can be obtained as a vulcanized molded article obtained by using 100 parts by mass of a chloroprene polymer, 1 part by mass of trimethyl thiourea, 3 parts by mass of 4,4'-bis(α,α-dimethylbenzyl)diphenylamine, 1 part by mass of stearic acid, 1 part by mass of N-phenyl-N'-(1,3-dimethylbutyl)-p-phenylenediamine, 50 parts by mass of carbon black FEF, 10 parts by mass of an ether ester-based plasticizer, 4 parts by mass of magnesium oxide, and 5 parts by mass of zinc oxide. According to the chloroprene polymer of the present embodiment, regarding oil resistance, a volume change rate as measured according to JIS K 6258 of less than 60% (preferably less than 50%, more preferably 45% or less) can be obtained, regarding compression set, compression set as measured according to JIS K 6262 of less than 40% (preferably 35% or less, more preferably 32% or less) can be obtained, regarding cold resistance, a temperature T10 as measured according to JIS K 6261 of lower than -3°C (preferably lower than -8°C, more preferably -10°C or lower) can be obtained, and regarding heat resistance, an elongation change rate after a vulcanized molded article is heated at 130°C for 72 hours as measured according to JIS K 6257 of more than - 40% (preferably more than -35%, more preferably -30% or more) can be obtained.

Examples of the unsaturated nitrile include acrylonitrile, methacrylonitrile, ethacrylonitrile, and phenylacrylonitrile. The unsaturated nitrile can be used alone or in combination of two or more kinds thereof. The unsaturated nitrile may include acrylonitrile from the viewpoint of easily obtaining excellent moldability and the viewpoint of easily obtaining excellent oil resistance, compression set, cold resistance, and heat resistance in the vulcanized molded article.

The content of the structural unit derived from an unsaturated nitrile contained in the chloroprene polymer is more than 0% by mass and 23% by mass or less on the basis of the total amount of the chloroprene polymer. When the content of the structural unit derived from an unsaturated nitrile is 0% by mass, the oil resistance of the vulcanized molded article is not improved. When the content of the structural unit derived from an unsaturated nitrile is more than 23% by mass, the cold resistance of the vulcanized molded article is deteriorated.

The content of the structural unit derived from an unsaturated nitrile may be 1% by mass or more, 2% by mass or more, 3% by mass or more, 5% by mass or more, 7% by mass or more, 8% by mass or more, 9% by mass or more, 10% by mass or more, more than 10% by mass, 12% by mass or more, 15% by mass or more, 18% by mass or more, or 20% by mass or more, from the viewpoint of easily obtaining excellent oil resistance. The content of the structural unit derived from an unsaturated nitrile may be 22% by mass or less, 21% by mass or less, 20% by mass or less, less than 20% by mass, 17% by mass or less, 15% by mass or less, 12% by mass or less, 11% by mass or less, less than 11% by mass, 10% by mass or less, less than 10% by mass, 8% by mass or less, 6% by mass or less, 5% by mass or less, less than 5% by mass, 4% by mass or less, or 3% by mass or less, from the viewpoint of easily obtaining excellent cold resistance. From these viewpoints, the content of the structural unit derived from an unsaturated nitrile may be 3 to 20% by mass, 3 to 10% by mass, 5 to 17% by mass, 9 to 17% by mass, or 10 to 20% by mass.

The content of the structural unit derived from an unsaturated nitrile contained in the chloroprene polymer can be calculated from the content of the nitrogen atom in the copolymer. Specifically, the content of the structural unit derived from an unsaturated nitrile can be calculated by measuring the content of the nitrogen atom in 100 mg of the chloroprene polymer using an element analysis apparatus (SUMIGRAPH 220F: manufactured by Sumika Chemical Analysis Service, Ltd.). The measurement of element analysis can be performed under the following conditions. For example, as for the electric furnace temperature, a reaction furnace, a reduction furnace, a column temperature, and a detector temperature are set at 900°C, 600°C, 70°C, and 100°C, respectively, oxygen is flowed as a combustion gas at 0.2 mL/min, and helium is flowed as a carrier gas at 80 mL/min. A calibration curve can be made using aspartic acid whose nitrogen content is known (10.52%) as a standard substance.

The content of the structural unit derived from chloroprene may be in the following range on the basis of the total amount of the chloroprene polymer. The content of the structural unit derived from chloroprene may be 77% by mass or more, 78% by mass or more, 79% by mass or more, 80% by mass or more, more than 80% by mass, 83% by mass or more, 85% by mass or more, 88% by mass or more, 89% by mass or more, more than 89% by mass, 90% by mass or more, more than 90% by mass, 92% by mass or more, 94% by mass or more, 95% by mass or more, more than 95% by mass, 96% by mass or more, or 97% by mass or more, from the viewpoint of easily obtaining excellent cold resistance. The content of the structural unit derived from chloroprene may be less than 100% by mass, 99% by mass or less, 98% by mass or less, 97% by mass or less, 95% by mass or less, 93% by mass or less, 92% by mass or less, 91% by mass or less, 90% by mass or less, less than 90% by mass, 88% by mass or less, 85% by mass or less, 82% by mass or less, or 80% by mass or less, from the viewpoint of easily obtaining excellent oil resistance. From these viewpoints, the content of the structural unit derived from chloroprene may be 77% by mass or more and less than 100% by mass, 80 to 97% by mass, 90 to 97% by mass, 83 to 95% by mass, 83 to 91% by mass, or 80 to 90% by mass. The content of the structural unit derived from chloroprene can be obtained, for example, by subtracting the content of the structural unit derived from an unsaturated nitrile from the total amount of the chloroprene polymer in a case where the chloroprene polymer is constituted from the structural unit derived from chloroprene and the structural unit derived from an unsaturated nitrile.

A monomer to be copolymerized with chloroprene is not limited to the unsaturated nitrile. Examples of the monomer copolymerizable with chloroprene include 2,3-dichloro-1,3-butadiene, 1-chloro-1,3-butadiene, styrene, isoprene, butadiene, acrylic acid, esters of acrylic acid, methacrylic acid, and esters of methacrylic acid. The content of the structural unit derived from 1-chloro-1,3-butadiene contained in the chloroprene polymer may be less than 1% by mass on the basis of the total amount of the chloroprene polymer.

The polymer structure of the chloroprene polymer is not particularly limited, and may be a block copolymer or a statistical copolymer.

The statistical copolymer of the chloroprene and the unsaturated nitrile can be produced, for example, by performing continuous addition or 10 cycles or more of intermittent portionwise addition of chloroprene after initiation of a polymerization reaction. At this time, the amount of chloroprene to be added during time period dt(n+1) between time t(n) and time t(n+1) can be determined on the basis of the total quantity of polymerization conversion of the chloroprene and the unsaturated nitrile during time period dt(n) between time t(n-1) and time t(n) when the time at which the polymerization reaction is initiated is designated as t(0) and "n" is an integer of 1 or more, and the ratio of the unreacted chloroprene and unsaturated nitrile can be maintained to be constant.

The statistical copolymer means a copolymer which can be described on the basis of Bernoulli's statistic model or a primary or secondary Markov's statistic model as described in J. C. Randall "POLYMER SEQUENCE DETERMINATION, Carbon-13 NMR Method" Academic Press, New York, 1977, pages 71-78. In a case where the statistical copolymer of the chloroprene and the unsaturated nitrile is constituted from a binary system monomer, a statistical copolymer may be obtained in a state where, with respect to reactivity ratios r1 and r2 when assuming that a ratio of the chloroprene and the unsaturated nitrile at the time of polymerization initiation as d[M1]/d[M2] in the following Mayo-Lewis Formula (I) and assuming that the chloroprene as M1 defined in the following Mayo-Lewis Formula (I), r1 is in a range of 0.3 to 3000 and r2 is in a range of $10^{-5}$ to 3.0.

[Mathematical Formula 1]

$$\frac{d[M1]}{d[M2]} = \frac{[M1]}{[M2]} \times \frac{r_1[M1]+[M2]}{[M1]+r_2[M2]} \quad \cdots \quad (\mathrm{I})$$

The chloroprene polymer can be obtained, for example, by emulsion polymerization. A polymerization initiator used in the emulsion polymerization is not particularly limited, and a known polymerization initiator, which is generally used in the emulsion polymerization of chloroprene, can be used. Examples of the polymerization initiator include organic peroxides such as potassium persulfate, ammonium persulfate, sodium persulfate, hydrogen peroxide, and t-butyl hydroperoxide.

An emulsifier used in the emulsion polymerization is not particularly limited, and a known emulsifier, which is generally used in the emulsion polymerization of chloroprene, can be used. Examples of the emulsifier include alkali metal salts of saturated or unsaturated aliphatic acids having 6 to 22 carbon atoms, alkali metal salts of rosin acids or disproportioned rosin acids (for example, potassium rosinate), and alkali metal salts (for example, sodium salt) of β-naphthalenesulfonic acid-formalin condensates.

A molecular weight adjustor used in the emulsion polymerization is not particularly limited, and a known molecular weight adjustor, which is generally used in the emulsion polymerization of chloroprene, can be used. Examples of the molecular weight adjustor include long chain alkylmercaptans such as n-dodecylmercaptan, t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1-pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyl dithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yldithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yldithiobenzoate, 2-cyanoprop-2-yldithiobenzoate, t-butyl dithiobenzoate, 2,4,4-trimethylpenta-2-yldithiobenzoate, 2-(4-chlorophenyl)-prop-2-yldithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzyl sulfanyl butyric acid, dibenzyl tetrathioterephthalate, carboxymethyl dithiobenzoate, dithiobenzoate terminal-carrying polyethylene oxide), 4-cyano-4-methyl-4-thiobenzylsulfanyl butyrate terminal-carrying poly(ethylene oxide), 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate, cyanomethyl methyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbamodithioate, 2-cyano-2-propyldodecyl trithiocarbonate, dibenzyl trithiocarbonate, butylbenzyl trithiocarbonate, 2-[[(butylthio)thioxomethyl]thio]propionic acid, 2-[[(dodecylthio)thioxomethyl]thio]propionic acid, 2-[[(butylthio)thioxomethyl]thio] succinic acid, 2-[[(dodecylthio)thioxomethyl]thio] succinic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethylbutyl trithiocarbonate, benzyl-2-[(2-hydroxyethyl)amino]-1-methyl-2-oxoethyl trithiocarbonate, 3-[[[(t-butyl)thio]thioxomethyl]thio]propionic acid, cyanomethyldodecyl trithiocarbonate, diethylaminobenzyl trithiocarbonate, and dibutylaminobenzyl trithiocarbonate.

The polymerization temperature and the final conversion rate of the monomer are not particularly limited, and the polymerization temperature may be, for example, 0 to 50°C or 10 to 50°C. The polymerization may be performed so that the final conversion rate (polymerization rate) of the monomer falls within a range of 40 to 95% by mass, 40 to 60% by mass, 40 to 55% by mass, 40% by mass or more and less than 55% by mass, 40 to 50% by mass, or the like. The chloroprene polymer of the present embodiment may be a chloroprene polymer obtained by polymerizing a monomer containing chloroprene and an unsaturated nitrile until the final conversion rate is within the above range. In order to adjust the final conversion rate, when the conversion rate becomes a desired value, a polymerization inhibitor for terminating the polymerization reaction may be added to terminate the polymerization.

A polymerization inhibitor is not particularly limited, and a known polymerization inhibitor, which is generally used in the emulsion polymerization of chloroprene, can be used. Examples of the polymerization inhibitor include phenothiazine (thiodiphenylamine), 4-t-butylcatechol, and 2,2-methylenebis-4-methyl-6-t-butylphenol.

The chloroprene polymer can be obtained, for example, by removing the unreacted monomer by a steam stripping method, then adjusting the pH of the latex, and performing steps of freeze coagulation, washing with water, hot air drying, and the like of ordinary methods.

A method for producing a chloroprene polymer of the present embodiment may include a polymerization step of polymerizing a monomer composition containing chloroprene and an unsaturated nitrile to obtain a first composition, a monomer removing step of removing an unreacted monomer in the first composition to obtain a second composition, a pH adjustment step of adjusting the pH of the second composition to obtain a third composition, a freeze-coagulation step of subjecting the third composition to freeze-coagulation to obtain a fourth composition, and a drying step of subjecting the fourth composition to a drying treatment to obtain a chloroprene polymer. The chloroprene polymer of the present embodiment may be a chloroprene polymer obtained by such a production method.

The method for producing a chloroprene polymer of the present embodiment may not include a step of subjecting the second composition to a thermal treatment between the monomer removing step and the pH adjustment step, and may not include a step of subjecting the second composition to a thermal treatment at 55 to 70°C for 1 to 7 hours. The method for producing a chloroprene polymer of the present embodiment may include a washing step of washing the fourth composition with water after the freeze-coagulation step. The method for producing a chloroprene polymer of the present embodiment may not include a step of subjecting the fourth composition to a thermal treatment at 140°C or higher (for example, 140 to 180°C) after the freeze-coagulation step, and in the drying step, the fourth composition may be subjected to a drying treatment at lower than 140°C (135°C or lower, 130°C or lower, or the like). The method for producing a chloroprene polymer of the present embodiment may not include a step of subjecting the chloroprene polymer to a thermal treatment after the drying step, and may not include a step of subjecting the chloroprene polymer to a thermal treatment at 55 to 100°C (for example, 55 to 80°C) for 3 to 120 hours (for example, 12 to 120 hours).

The chloroprene polymer is classified into a mercaptan-modified type, a xanthogen-modified type, a sulfur-modified type, a dithiocarbonate-based type, a trithiocarbonate-based type, and a carbamate-based type, depending on the types of molecular weight adjustors.

The chloroprene polymer has a peak top at 5.80 to 6.00 ppm in a 1H-NMR spectrum as measured in a deuterochloroform solvent. In the 1H-NMR spectrum of the chloroprene polymer, the peak area ratio A/B of the peak area A at 5.80 to 6.00 ppm and the peak area B at 4.05 to 6.20 ppm is 0.9/100 to 1.1/100. When the peak area ratio A/B is 0.9/100 or more, excellent compression set is easily obtained. When the peak area ratio A/B is 1.1/100 or less, excellent moldability is easily obtained.

A peak (for example, a peak group) having a peak top at 5.80 to 6.00 ppm is a peak derived from vinyl hydrogen of the 1,2-isomer of the chloroprene structural unit in the chloroprene polymer. A peak (for example, a peak group) having a peak top at 4.05 to 6.20 ppm is a peak derived from vinyl hydrogen of the chloroprene structural unit in the chloroprene polymer. That is, the peak area ratio A/B of the peak area A at 5.80 to 6.00 ppm and the peak area B at 4.05 to 6.20 ppm of 0.9/100 to 1.1/100 indicates that 0.9/100 to 1.1/100 of the chloroprene structural unit in the chloroprene polymer is the 1,2-isomer.

The peak area ratio A/B may be more than 0.9/100, 1.0/100 or more, or more than 1.0/100, from the viewpoint of easily obtaining excellent compression set. The peak area ratio A/B may be less than 1.1/100, 1.0/100 or less, or less than 1.0/100, from the viewpoint of easily obtaining excellent moldability. From these viewpoints, the peak area ratio A/B may be 0.9/100 to 1.0/100, or 1.0/100 to 1.1/100.

In order to adjust the peak area ratio A/B of the chloroprene polymer, the polymerization temperature when the chloroprene and the unsaturated nitrile are copolymerized may be adjusted, and for example, in order to increase this peak area ratio A/B, copolymerization may be performed by setting the polymerization temperature to 20 to 50°C (30 to 50°C, 40 to 50°C, or the like).

From the viewpoint of easily obtaining excellent moldability and the viewpoint of easily obtaining excellent oil resistance, compression set, cold resistance, and heat resistance in the vulcanized molded article, the chloroprene polymer may have a peak top at 4.13 to 4.23 ppm in a 1H-NMR spectrum as measured in a deuterochloroform solvent.

In the 1H-NMR spectrum, a peak area ratio D/B of a peak area D at 4.13 to 4.23 ppm and the peak area B at 4.05 to 6.20 ppm may be in the following range. The peak area ratio D/B may be more than 0/100, 0.01/100 or more, more than 0.01/100, 0.02/100 or more, or 0.03/100 or more, from the viewpoint of easily obtaining excellent moldability and the viewpoint of easily obtaining excellent oil resistance, compression set, cold resistance, and heat resistance in the vulcanized molded article. The peak area ratio D/B may be 0.5/100 or less, less than 0.5/100, 0.4/100 or less, 0.3/100 or less, 0.2/100 or less, 0.1/100 or less, 0.05/100 or less, or 0.03/100 or less, from the viewpoint of easily obtaining excellent heat resistance in the vulcanized molded article. From these viewpoints, the peak area ratio D/B may be more than 0/100 and 0.5/100 or less, more than 0/100 and 0.2/100 or less, more than 0/100 and 0.05/100 or less, 0.03/100 to 0.2/100, or 0.03/100 to 0.05/100.

A peak (for example, a peak group) having a peak top at 4.13 to 4.23 ppm is a peak derived from a structure in which water is added to the 1,2-isomer of the chloroprene structural unit in the chloroprene polymer. That is, the peak area ratio D/B of the peak area D at 4.13 to 4.23 ppm and the peak area B at 4.05 to 6.20 ppm indicates a ratio of the structure in which water is added to the 1,2-isomer of the chloroprene structural unit in the chloroprene polymer.

Since water is added to the 1,2-isomer of the chloroprene structural unit by heating, in order to increase the peak area ratio D/B of the chloroprene polymer, a chloroprene polymer latex obtained by copolymerizing chloroprene and an unsaturated nitrile may be heat-treated, for example, at 50 to 70°C for 5 minutes to 10 hours. At this time, since the aforementioned peak area ratio A/B is decreased, a sufficient amount of the 1,2-isomer may be introduced into the chloroprene polymer in advance.

The chloroprene polymer has a peak top at 5.10 to 5.30 ppm in a 1H-NMR spectrum as measured in a deuterochloroform solvent. In the 1H-NMR spectrum of the chloroprene polymer, the peak area A at 5.80 to 6.00 ppm, the peak area B at 4.05 to 6.20 ppm, and the peak area C at 5.10 to 5.30 ppm satisfy formula "$(C - 2A)B \leq 2.0/100$" from the viewpoint of obtaining excellent heat resistance in the vulcanized molded article. That is, a ratio ($(C - 2A)B$; hereinafter, referred to as "peak area ratio X" in some cases) of a numerical value ($C - 2A$) obtained by subtracting twice the peak area A from the peak area C and the peak area B is 2.0/100 or less.

A peak (for example, a peak group) having a peak top at 5.10 to 5.30 ppm is a peak derived from dihydrogen of the terminal of the 1,2-isomer and monohydrogen of the 3,4-bond in the chloroprene polymer. The numerical value ($C - 2A$) obtained by subtracting twice the peak area A from the peak area C represents the 3,4-bond. The peak area ratio X, which is the ratio of the numerical value ($C - 2A$) and the peak area B, indicates a ratio of the 3,4-isomer of the chloroprene structural unit in the chloroprene polymer. In order to decrease the peak area ratio X of the chloroprene polymer, the polymerization temperature may be lowered.

The peak area ratio X may be 1.8/100 or less, 1.5/100 or less, 1.2/100 or less, 1.0/100 or less, 0.8/100 or less, or 0.5/100 or less, from the viewpoint of easily obtaining excellent heat resistance in the vulcanized molded article. The peak area ratio X may be more than 0/100, 0.1/100 or more, 0.3/100 or more, 0.5/100 or more, 0.8/100 or more, 1.0/100 or more, 1.2/100 or more, or 1.5/100 or more.

The 1H-NMR spectrum can be measured as follows. The 1H-NMR spectrum can be measured in such a manner that the aforementioned chloroprene polymer is refined with xylene and methanol and freeze-dried to obtain a sample, and then the sample is dissolved in deuterochloroform. The measurement data can be corrected on the basis of the peak (7.24 ppm) of chloroform in deuterochloroform used as a solvent.

<Chloroprene polymer composition>

A chloroprene polymer composition (chloroprene-unsaturated nitrile copolymer composition) of the present embodiment contains the chloroprene polymer of the present embodiment. The chloroprene polymer composition of the present embodiment may be a vulcanizate of the chloroprene polymer.

The content of the chloroprene polymer in the chloroprene polymer composition of the present embodiment may be in the following range on the basis of the total amount of the chloroprene polymer composition. The content of the chloroprene polymer may be 10% by mass or more, 20% by mass or more, 30% by mass or more, 40% by mass or more, or 45% by mass or more. The content of the chloroprene polymer may be 90% by mass or less, 80% by mass or less, 70% by mass or less, 60% by mass or less, or 50% by mass or less. From these viewpoints, the content of the chloroprene polymer may be 10 to 90% by mass.

The chloroprene polymer composition of the present embodiment may contain an additive other than the chloroprene polymer. Examples of such additive include a vulcanizing agent, a plasticizer, an anti-aging agent, a filler, a vulcanization accelerator, a vulcanization rate adjustor, a processing aid, a softener, and an anti-scorching agent.

Examples of the vulcanizing agent include sulfur; a morpholine compound (such as dithiodimorpholine); elemental metals such as beryllium, magnesium, zinc, calcium, barium, germanium, titanium, tin, zirconium, antimony, vanadium, bismuth, molybdenum, tungsten, tellurium, selenium, iron, nickel, cobalt, and osmium, and oxides and hydroxides of these metals. Examples of the vulcanizing agent include magnesium oxide and zinc oxide.

Examples of the plasticizer include an ether ester-based plasticizer, an aromatic hydrocarbon-based plasticizer, and dioctyl sebacate.

Examples of the anti-aging agent include an ozone anti-aging agent, a phenol-based anti-aging agent, an amine-based anti-aging agent, an acrylate-based anti-aging agent, an imidazole-based anti-aging agent, metal carbamates, waxes, and alkylated diphenylamine (such as 4,4'-bis($\alpha,\alpha$-dimethylbenzyl)diphenylamine, N-phenyl-N'-(1,3-dimethylbutyl)-p-phenylenediamine, and octylated diphenylamine).

Examples of the filler include carbon black, silica, clay, talc, calcium carbonate, and factice.

Examples of the vulcanization accelerator include a thiourea compound (such as ethylene thiourea and trimethyl thiourea); a guanidine compound; a thiuram compound; and a thiazole compound.

Examples of the vulcanization rate adjustor include tetramethylthiuram disulfide.

Examples of the processing aid include stearic acid.

<Molded article and vulcanized molded article>

A molded article of the present embodiment is a molded article of the chloroprene polymer or the chloroprene polymer composition of the present embodiment, and can be obtained by mold processing the chloroprene polymer or the chloroprene polymer composition of the present embodiment into a shape suitable to purposes.

A vulcanized molded article of the present embodiment is a vulcanized molded article of the chloroprene polymer or the chloroprene polymer composition of the present embodiment. The vulcanized molded article of the present embodiment can be obtained by mold processing the chloroprene polymer or the chloroprene polymer composition of the present embodiment into a shape suitable to purposes and vulcanizing during molding or after molding, and can also be obtained by mold processing the vulcanizate of the present embodiment into a shape suitable to purposes.

The molding method is not particularly limited. For example, in a case where a molded article is a transmission belt, a conveyor belt, a hose, a wiper, or the like, the molded article can be formed by press molding, injection molding, extrusion molding, or the like. Since the chloroprene polymer of the present embodiment is used, the vulcanized molded article is excellent in oil resistance, compression set, and cold resistance. By vulcanizing and molding, the chloroprene rubber composition can be suitably used as a vulcanized molded article of a transmission belt, a conveyor belt, a hose, a wiper, a seal material (such as packing, gasket, oil seal, and diaphragm), a roll (rubber roll), an air spring, a vibration-proof material, an adhesive, a boot, a rubberized fabric, a sponge, a rubber lining, and the like.

The vulcanized molded article of the present embodiment can be used as a transmission belt, a conveyor belt, a hose, a wiper, a seal material (such as packing, gasket, oil seal, and diaphragm), a roll (rubber roll), an air spring, a vibration-proof material, an adhesive, a boot, a rubberized fabric, a sponge, a rubber lining, and the like. The chloroprene polymer and the chloroprene polymer composition of the present embodiment can be used for obtaining a vulcanized molded article to be used in these use applications.

The vulcanized molded article of the present embodiment can be suitably used as a roll (rubber roll). The roll has a core and the vulcanized molded article of the present embodiment, and the vulcanized molded article covers at least a part of the surface (outer circumference) of the core. The core may be a core made of metal, and may be, for example, an iron core. The core may be a core made of rubber, and may be, for example, a core of the vulcanized molded article of the present embodiment.

An aspect of the roll (rubber roll) of the present embodiment is a roll having a vulcanized molded article of a chloroprene polymer composition, in which the chloroprene polymer composition contains a chloroprene polymer, the chloroprene polymer has a structural unit derived from chloroprene and a structural unit derived from an unsaturated nitrile, the chloroprene polymer has peak tops at 5.80 to 6.00 ppm and 5.10 to 5.30 ppm in a 1H-NMR spectrum as measured in a deuterochloroform solvent, in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)/B $\leq$ 2.0/100", and a content of the structural unit derived from an unsaturated nitrile is more than 0% by mass and 23% by mass or less.

The roll can be used for various use applications such as papermaking, metal manufacturing (for example, iron manufacturing), printing, general industry, agricultural machinery (for example, for rice hulling), and food processing. The roll may be used in a cleaning step of cleaning a metal plate, and may be used, for example, in a cleaning step of cleaning a metal plate in a basic environment (such as an environment with a hydrogen ion index (pH) of 13 or more).

A sponge is obtained by mixing the chloroprene polymer or the chloroprene polymer composition of the present embodiment with a metal oxide, a plasticizer, a filler, and the like using a roll, a Banbury mixer, an extruder, or the like, and adding a foaming agent during vulcanization to foam.

The sponge is a porous material having voids of innumerable fine pores therein. A pore may be in the form of an open cell or a closed cell, and in both of the forms of an open cell and a closed cell. In a case where the pores are sufficiently large and continuous to each other, the sponge has a property of absorbing a liquid in a manner of replacement with air inside the pores when immersed in the liquid and has a property of easily releasing the liquid in response to an external force. Furthermore, in a case where the pores are small, the sponge can be used as an excellent cushioning material, an excellent heat insulating material, and the like. The vulcanizate of the chloroprene polymer or the chloroprene polymer composition of the present embodiment can be used widely in sponges, specifically, can be used in vibration-proof materials, sponge seal members, wetsuits, shoes, and the like.

The density of the sponge may be 0.10 to 0.80 g/cm$^3$, 0.10 to 0.50 g/cm$^3$, or 0.10 to 0.35 g/cm$^3$. By adjusting the density of the sponge in this range, the sponge itself can be made lighter while maintaining its mechanical strength such as tensile strength. In order to adjust the density of the sponge, the blended amount of a foaming agent, foaming conditions, and the like when the chloroprene polymer or the chloroprene polymer composition is foamed may be adjusted. The density of the sponge can be measured according to JIS K 7222.

The Type C durometer hardness of the sponge may be 5 to 70 or 5 to 60. By adjusting the Type C durometer hardness of the sponge in this range, a sponge excellent in shock absorption, processability, water absorption, air permeability, sound absorption, and the like can be obtained. In order to adjust the Type C durometer hardness of the sponge, the blended amount of a foaming agent, vulcanization and foaming conditions, and the like when the chloroprene polymer or the chloroprene polymer composition is foamed may be adjusted. The Type C durometer hardness of the sponge can be measured according to JIS K 6253-3.

The sponge composed of the chloroprene polymer or the chloroprene polymer composition of the present embodiment is excellent in heat resistance and cold resistance, and thus can be used even in a temperature environment of -40°C to 140°C. Furthermore, the sponge composed of the chloroprene polymer or the chloroprene polymer composition of the present embodiment is also excellent in oil resistance and chemical resistance, and can be used in an environment where lubricating oil or fuel oil such as engine oil and refrigerator oil is splashed, and an environment where acid resistance, alkali resistance, alcohol resistance, or the like are required.

**Examples**

Hereinafter, the present invention will be more specifically described on the basis of Examples. Note that, Examples described below are only typical examples of the present invention and the scope of the present invention is not restricted thereby at all.

<Production of polymer>

(Polymer 1)

To a polymerization tank having an inner volume of 3 L and equipped with a heating/cooling jacket and a stirrer, 37 parts by mass of chloroprene (monomer), 37 parts by mass of acrylonitrile (monomer), 0.5 parts by mass of diethylxanthogen disulfide, 200 parts by mass of pure water, 5.00 parts by mass of potassium rosinate (manufactured by Harima Chemicals, Inc.), 0.40 parts by mass of sodium hydroxide, and 2.0 parts by mass of sodium salt of β-naphthalene sulfonic acid formalin condensate (manufactured by Kao Corporation) were added. Next, 0.1 parts by mass of potassium persulfate was added as a polymerization initiator, and then emulsion polymerization was performed under a nitrogen flow at a polymerization temperature of 20°C. Portionwise addition of the chloroprene was started 20 seconds after polymerization initiation, and was continuously performed by adjusting the portionwise addition flow rate with an electromagnetic valve on the basis of the refrigerant calorimetric change for 10 seconds after polymerization initiation and thereafter by re-adjusting the flow rate every 10 seconds. At the time point when the polymerization rate with respect to the total amount of chloroprene and acrylonitrile became 50% by mass, 0.1 parts by mass of phenothiazine as a polymerization inhibitor was added to terminate the polymerization. Thereafter, by removing the unreacted monomer in the reaction solution under reduced pressure, a chloroprene polymer latex (chloroprene-acrylonitrile copolymer latex) was obtained.

The polymerization rate of the chloroprene polymer latex was calculated from the dry mass of the air-dried chloroprene polymer latex. Specifically, calculation was conducted by the Formula (II) below. In the formula, the solid concentration refers to the concentration [% by mass] of the solid fraction obtained by heating 2 g of the sampled chloroprene polymer latex at 130°C to remove volatile components such as the solvent (water), volatile chemicals, and the raw materials. The total input amount refers to the total amount of the raw materials, the reagents, and the solvent (water) which had been input into the polymerization tank from the polymerization initiation through a certain time. The non-evaporated residual fraction refers to the mass of the chemicals which did not evaporate under a condition of 130°C and remained as a solid fraction together with the polymer, among the chemicals and the raw materials which had been input from the polymerization initiation through a certain time. The monomer input amount refers to the total amount of the monomer which was input initially to the polymerization tank and the monomer which was added portionwise from the polymerization initiation through a certain time.

The "monomer" refers to the total amount of the chloroprene and the acrylonitrile.

$$\text{Polymerization rate [\%]} = [\{(\text{Total input amount [g]} \times \text{Solid concentration [\% by mass]}/100) - (\text{Non-evaporated residual fraction [g]})\}/\text{Monomer input amount [g]}] \times 100 \qquad \dots \text{(II)}$$

The aforementioned chloroprene polymer latex was adjusted to pH 7.0, and freeze-coagulated on a metal plate cooled to -20°C so as to be demulsified, thereby obtaining a sheet. This sheet was washed with water and dried for 15 minutes at 130°C, thereby obtaining a chloroprene polymer (chloroprene-acrylonitrile copolymer, Polymer 1) in a solid form.

The amount of the structural unit derived from acrylonitrile contained in the chloroprene polymer was calculated from the content of the nitrogen atom in the chloroprene polymer. Specifically, the amount of the structural unit derived from acrylonitrile was calculated by measuring the content of the nitrogen atom in 100 mg of the chloroprene polymer using an element analysis apparatus (SUMIGRAPH 220F: manufactured by Sumika Chemical Analysis Service, Ltd.). The measurement of element analysis was performed under the following conditions. As for the electric furnace temperature, a reaction furnace, a reduction furnace, a column temperature, and a detector temperature were set at 900°C, 600°C, 70°C, and 100°C, respectively, oxygen was flowed as a combustion gas at 0.2 mL/min, and helium was flowed as a carrier gas at 80 mL/min. A calibration curve was made using aspartic acid whose nitrogen content is known (10.52%) as a standard substance. The amount of the structural unit derived from acrylonitrile in the chloroprene polymer was 10% by mass.

The aforementioned chloroprene polymer was refined with xylene and methanol and freeze-dried again, thereby obtaining a sample. The sample was dissolved in deuterochloroform and then the 1H-NMR spectrum was measured. The measurement data were corrected on the basis of the peak (7.24 ppm) of chloroform in deuterochloroform used as a solvent.

As a result of the measurement, the peak area ratio A/B of the peak area A at 5.80 to 6.00 ppm and the peak area B at 4.05 to 6.20 ppm of the chloroprene polymer was 1.0/100, the peak area ratio D/B of the peak area D at 4.13 to 4.23 ppm and the peak area B at 4.05 to 6.20 ppm was 0.03/100, and the peak area ratio X (= (C - 2A)B) was 1.0/100.

(Polymer 2)

A chloroprene polymer (chloroprene-acrylonitrile copolymer, Polymer 2) was obtained by the same procedures as in Polymer 1 mentioned above, except that the polymerization temperature was changed to 30°C. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 0.9/100, the peak area ratio D/B was 0.03/100, and the peak area ratio X was 1.0/100.

(Polymer 3)

A chloroprene polymer (chloroprene-acrylonitrile copolymer, Polymer 3) was obtained by the same procedures as in Polymer 1 mentioned above, except that the polymerization temperature was changed to 50°C. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.1/100, the peak area ratio D/B was 0.03/100, and the peak area ratio X was 1.0/100.

(Polymer 4)

A chloroprene polymer (chloroprene-acrylonitrile copolymer, Polymer 4) was obtained by the same procedures as in Polymer 1 mentioned above, except that the used amount of chloroprene was changed to 32.1 parts by mass and the used amount of acrylonitrile was changed to 10.7 parts by mass. When the amount of the structural unit derived from acrylonitrile in the chloroprene polymer and the 1H-NMR spectrum were measured by the same procedures as in Polymer 1 mentioned above, the amount of the structural unit derived from acrylonitrile was 3% by mass, the peak area ratio A/B was 1.0/100, the peak area ratio D/B was 0.03/100, and the peak area ratio X was 1.0/100.

(Polymer 5)

A chloroprene polymer (chloroprene-acrylonitrile copolymer, Polymer 5) was obtained by the same procedures as in Polymer 1 mentioned above, except that the used amount of chloroprene was changed to 13.1 parts by mass and the used amount of acrylonitrile was changed to 39.3 parts by mass. When the amount of the structural unit derived from acrylonitrile in the chloroprene polymer and the 1H-NMR spectrum were measured by the same procedures as in Polymer 1 mentioned above, the amount of the structural unit derived from acrylonitrile was 20% by mass, the peak area ratio A/B was 1.0/100, the peak area ratio D/B was 0.03/100, and the peak area ratio X was 1.0/100.

(Polymer 6)

To a polymerization tank having an inner volume of 3 L and equipped with a heating/cooling jacket and a stirrer, 37 parts by mass of chloroprene (monomer), 37 parts by mass of acrylonitrile (monomer), 0.5 parts by mass of diethylxanthogen disulfide, and 200 parts by mass of tetrahydrofuran were added. Next, 0.1 parts by mass of azobisisobutyronitrile was added as a polymerization initiator, and then emulsion polymerization was performed under a nitrogen flow at a polymerization temperature of 20°C. Portionwise addition of the chloroprene was started 20 seconds after polymerization initiation, and was continuously performed by adjusting the portionwise addition flow rate with an electromagnetic valve on the basis of the refrigerant calorimetric change for 10 seconds after polymerization initiation and thereafter by re-adjusting the flow rate every 10 seconds. At the time point when the polymerization rate with respect to the total amount of chloroprene and acrylonitrile became 50% by mass, 0.1 parts by mass of phenothiazine as a polymerization inhibitor was added to terminate the polymerization. Thereafter, by removing the unreacted monomer in the reaction solution under reduced pressure, a chloroprene polymer solution (chloroprene-acrylonitrile copolymer solution) was obtained. The solution was added to methanol which was three times the volume of the solution, and the obtained precipitate was dried under reduced pressure to obtain a chloroprene polymer (chloroprene-acrylonitrile copolymer, Polymer 6). When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.0/100, the peak area ratio D/B was 0.03/100, and the peak area ratio X was 0.5/100.

(Polymer 7)

A chloroprene polymer (chloroprene-acrylonitrile copolymer, Polymer 7) was obtained by the same procedures as in Polymer 6 mentioned above, except that tetrahydrofuran (solvent) was changed to benzene. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.0/100, the peak area ratio D/B was 0.03/100, and the peak area ratio X was 1.5/100.

(Polymer X1)

A chloroprene polymer (Polymer X1) was obtained by the same procedures as in Polymer 1 mentioned above, except that the used amount of chloroprene was changed to 100 parts by mass, the used amount of acrylonitrile was changed to 0 parts by mass, and chloroprene was not added portionwise. When the amount of the structural unit derived from acrylonitrile in the obtained chloroprene polymer and the 1H-NMR spectrum were measured by the same procedures as in Polymer 1 mentioned above, the amount of the structural unit derived from acrylonitrile was 0% by mass, the peak area ratio A/B was 1.0/100, the peak area ratio D/B was 0.03/100, and the peak area ratio X was 1.0/100.

(Polymer X2)

A chloroprene polymer (chloroprene-acrylonitrile copolymer, Polymer X2) was obtained by the same procedures as in Polymer 1 mentioned above, except that the used amount of chloroprene was changed to 8.1 parts by mass and the used amount of acrylonitrile was changed to 46 parts by mass. When the amount of the structural unit derived from acrylonitrile in the chloroprene polymer and the 1H-NMR spectrum were measured by the same procedures as in Polymer 1 mentioned above, the amount of the structural unit derived from acrylonitrile was 25% by mass, the peak area ratio A/B was 1.0/100, the peak area ratio D/B was 0.02/100, and the peak area ratio X was 1.0/100.

(Polymer X3)

A chloroprene polymer (chloroprene-acrylonitrile copolymer, Polymer X3) was obtained by the same procedures as in Polymer 7 mentioned above, except that the polymerization temperature was changed to -5°C. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 0.6/100, the peak area ratio D/B was 0.03/100, and the peak area ratio X was 1.0/100.

(Polymer X4)

A chloroprene polymer (chloroprene-acrylonitrile copolymer, Polymer X4) was obtained by the same procedures as in Polymer 1 mentioned above, except that the polymerization temperature was changed to 20°C. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 0.8/100, the peak area ratio D/B was 0.03/100, and the peak area ratio X was 0.8/100.

(Polymer X5)

A chloroprene polymer (chloroprene-acrylonitrile copolymer, Polymer X5) was obtained by the same procedures as in Polymer 1 mentioned above, except that the polymerization temperature was changed to 59°C. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.2/100, the peak area ratio D/B was 0.03/100, and the peak area ratio X was 1.2/100.

(Polymer X6)

A chloroprene polymer (chloroprene-acrylonitrile copolymer, Polymer X6) was obtained by the same procedures as in Polymer 6 mentioned above, except that the polymerization temperature was changed to 70°C and the atmosphere was changed from a nitrogen flow to a nitrogen atmosphere. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.5/100, the peak area ratio D/B was 0.03/100, and the peak area ratio X was 1.0/100.

(Polymer X7)

A chloroprene polymer (chloroprene-acrylonitrile copolymer, Polymer X7) was obtained by the same procedures as in Polymer 7 mentioned above, except that the polymerization temperature was changed to 50°C and heating was performed for 360 minutes at 60°C after the unreacted monomer in the reaction solution was removed. When the amount of the structural unit derived from acrylonitrile in the chloroprene polymer and the 1H-NMR spectrum were measured by the same procedures as in Polymer 1 mentioned above, the amount of the structural unit derived from acrylonitrile was 10% by mass, the peak area ratio A/B was 1.0/100, the peak area ratio D/B was 0.2/100, and the peak area ratio X was 2.1/100.

<Production of polymer composition>

100 parts by mass of a polymer of Polymer No. presented in Table 1, 1 part by mass of trimethyl thiourea (manufactured by OUCHI SHINKO CHEMICAL INDUSTRIAL CO., LTD., NOCCELER TMU), 3 parts by mass of 4,4'-bis($\alpha,\alpha$-dimethylbenzyl)diphenylamine (manufactured by OUCHI SHINKO CHEMICAL INDUSTRIAL CO., LTD., NOCRAC CD), 1 part by mass of stearic acid (manufactured by New Japan Chemical Co., Ltd., Stearic Acid 50S), 1 part by mass of N-phenyl-N'-(1,3-dimethylbutyl)-p-phenylenediamine (manufactured by OUCHI SHINKO CHEMICAL INDUSTRIAL CO., LTD., NOCRAC 6C), 50 parts by mass of carbon black FEF (manufactured by Asahi Carbon Co., Ltd., Asahi #60), 10 parts by mass of an ether ester-based plasticizer (manufactured by ADEKA Corporation, ADK CIZER RS-700), 4 parts by mass of magnesium oxide (manufactured by Kyowa Chemical Industry Co., Ltd., KYOWAMAG 150), and 5 parts by mass of zinc oxide (manufactured by SAKAI CHEMICAL INDUSTRY CO., LTD., Zinc Oxide No. 2) were kneaded with an 8-inch open roll, thereby obtaining a polymer composition.

<Evaluation of moldability>

The scorch time was obtained by conducting a Mooney scorch test according to JIS K 6300-1 using the aforementioned polymer composition. Evaluation results are presented in Table 1. A case where the scorch time was 18 minutes or longer was evaluated as good.

<Evaluation of vulcanized molded article>

The aforementioned polymer composition was subjected to press vulcanization under a condition of 160°C × 20 minutes to produce a sheet-shaped vulcanized molded article having a thickness of 2 mm. The following evaluations were performed for this vulcanized molded article. Evaluation results are presented in Table 1.

(Oil resistance)

The oil resistance was measured according to JIS K 6258 using the aforementioned vulcanized molded article. ASTM No. 3 Oil (manufactured by JAPAN SUN OIL COMPANY, LTD., IRM903) was used as the oil type, and a volume change rate ($\Delta V$) after immersion at 100°C for 72 hours was calculated. A case where the volume change rate was less than 60% was evaluated as good.

(Compression set)

Compression set was measured using the aforementioned vulcanized molded article according to JIS K 6262 under the test condition of 130°C for 72 hours. A case where the compression set was less than 40% was evaluated as good.

(Cold resistance)

A Gehman's torsion test (T10) was measured according to JIS K 6261 using the aforementioned vulcanized molded article. T10 refers to a temperature at which a torsional modulus is 10 times that at normal temperature (23°C), and a smaller number indicates that cold resistance becomes satisfactory. A case where T10 was lower than -3°C was evaluated as good.

(Heat resistance)

An elongation change rate ($\Delta EB$) was measured according to JIS K 6257 after the aforementioned vulcanized molded article (except for Comparative Examples 4 and 5) was heated at 130°C for 72 hours. A case where the elongation change rate was higher than -40°C was evaluated as good.

[Table 1]

| | | | Example | | | | | | | Comparative Example | | | | | | |
|---|---|---|---|---|---|---|---|---|---|---|---|---|---|---|---|---|
| | | | 1 | 2 | 3 | 4 | 5 | 6 | 7 | 1 | 2 | 3 | 4 | 5 | 6 | 7 |
| Polymer | | Polymer No. | 1 | 2 | 3 | 4 | 5 | 6 | 7 | X1 | X2 | X3 | X4 | X5 | X6 | X7 |
| | | Amount [% by mass] of structural unit derived from unsaturated nitrile | 10 | 10 | 10 | 3 | 20 | 10 | 10 | 0 | 25 | 10 | 10 | 10 | 10 | 10 |
| | | Peak area ratio A/B (B=100) | 1.0 | 0.9 | 1.1 | 1.0 | 1.0 | 1.0 | 1.0 | 1.0 | 1.0 | 0.6 | 0.8 | 1.2 | 1.5 | 1.0 |
| | | Peak area ratio D/B (B = 100) | 0.03 | 0.03 | 0.03 | 0.03 | 0.03 | 0.03 | 0.03 | 0.03 | 0.02 | 0.03 | 0.03 | 0.03 | 0.03 | 0.2 |
| | | Peak area ratio X {= (C - 2A)/B} (B=100) | 1.0 | 1.0 | 1.0 | 1.0 | 1.0 | 0.5 | 1.5 | 1.0 | 1.0 | 1.0 | 0.8 | 1.2 | 1.0 | 2.1 |
| Evaluation | | Moldability [min] | 20 | 22 | 19 | 20 | 20 | 20 | 20 | 20 | 20 | 27 | 25 | 17 | 15 | 20 |
| | | Oil resistance [%] | 20 | 20 | 20 | 45 | 7 | 20 | 20 | 60 | 3 | 20 | 20 | 20 | 20 | 20 |
| | | Compression set [%] | 27 | 32 | 25 | 27 | 27 | 27 | 27 | 27 | 27 | 50 | 40 | 23 | 20 | 27 |
| | | Cold resistance [°C] | -26 | -26 | -26 | -31 | -10 | -26 | -26 | -37 | -3 | -26 | -26 | -26 | -26 | -26 |
| | | Heat resistance [%] | -19 | -19 | -19 | -19 | -19 | -10 | -30 | -19 | -19 | -19 | - | - | -19 | -40 |

**Claims**

1. A chloroprene polymer comprising a structural unit derived from chloroprene and a structural unit derived from an unsaturated nitrile, wherein

   the chloroprene polymer comprises peak tops at 5.80 to 6.00 ppm and 5.10 to 5.30 ppm in a 1H-NMR spectrum as measured in a deuterochloroform solvent,
   in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)B $\leq$ 2.0/100", and
   a content of the structural unit derived from an unsaturated nitrile is more than 0% by mass and 23% by mass or less.

2. The chloroprene polymer according to claim 1, wherein the chloroprene polymer further comprises a peak top at 4.13 to 4.23 ppm in the 1H-NMR spectrum, and
   in the 1H-NMR spectrum, a peak area ratio D/B of a peak area D at 4.13 to 4.23 ppm and the peak area B is more than 0/100 and 0.05/100 or less.

3. The chloroprene polymer according to claim 2, wherein the peak area ratio D/B is 0.03/100 to 0.05/100.

4. A chloroprene polymer composition comprising the chloroprene polymer according to any one of claims 1 to 3.

5. A vulcanized molded article of the chloroprene polymer composition according to claim 4.

6. A roll comprising a vulcanized molded article of a chloroprene polymer composition, wherein

   the chloroprene polymer composition comprises a chloroprene polymer,
   the chloroprene polymer comprises a structural unit derived from chloroprene and a structural unit derived from an unsaturated nitrile,
   the chloroprene polymer comprises peak tops at 5.80 to 6.00 ppm and 5.10 to 5.30 ppm in a 1H-NMR spectrum as measured in a deuterochloroform solvent,
   in the 1H-NMR spectrum, a peak area ratio A/B of a peak area A at 5.80 to 6.00 ppm and a peak area B at 4.05 to 6.20 ppm is 0.9/100 to 1.1/100, and the peak area A, the peak area B, and a peak area C at 5.10 to 5.30 ppm satisfy formula "(C - 2A)B $\leq$ 2.0/100", and
   a content of the structural unit derived from an unsaturated nitrile is more than 0% by mass and 23% by mass or less.

## INTERNATIONAL SEARCH REPORT

| International application No. |
|---|
| **PCT/JP2022/009790** |

**A. CLASSIFICATION OF SUBJECT MATTER**

*F16C 13/00*(2006.01)i; *C08F 220/42*(2006.01)i; *C08F 236/18*(2006.01)i; *C08L 11/02*(2006.01)i
FI: C08F236/18; C08F220/42; C08L11/02; F16C13/00 A; F16C13/00 B

According to International Patent Classification (IPC) or to both national classification and IPC

**B. FIELDS SEARCHED**

Minimum documentation searched (classification system followed by classification symbols)

F16C13/00; C08F220/42; C08F236/18; C08L11/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/095962 A1 (DENKA COMPANY LTD) 14 May 2020 (2020-05-14) paragraphs [0037], [0038], [0057], [0058], [0074], [0081], example A4 | 1-6 |
| A | WO 2020/095967 A1 (DENKA COMPANY LTD) 14 May 2020 (2020-05-14) entire text | 1-6 |
| A | JP 2009-191235 A (DENKI KAGAKU KOGYO KK) 27 August 2009 (2009-08-27) entire text | 1-6 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/009790**

| Patent document cited in search report | | | Publication date (day/month/year) | Patent family member(s) | | | Publication date (day/month/year) |
|---|---|---|---|---|---|---|---|
| WO | 2020/095962 | A1 | 14 May 2020 | CN | 112912410 | A | |
| | | | | TW | 202030212 | A | |
| WO | 2020/095967 | A1 | 14 May 2020 | CN | 112912431 | A | |
| JP | 2009-191235 | A | 27 August 2009 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55145715 A
- JP 2012082289 A

- WO 2013015043 A

**Non-patent literature cited in the description**

- **J. C. RANDALL.** POLYMER SEQUENCE DETERMINATION, Carbon-13 NMR Method. Academic Press, 1977, 71-78